Europäisches Patentamt

European Patent Office

Office européen des brevets

(11) Veröffentlichungsnummer: **0 060 500 B1**

(12) **EUROPÄISCHE PATENTSCHRIFT**

(45) Veröffentlichungstag der Patentschrift: **09.11.88**

(21) Anmeldenummer: **82101890.0**

(22) Anmeldetag: **10.03.82**

(51) Int. Cl.⁴: **B 29 C 47/02,** B 32 B 27/06, B 32 B 31/30, B 29 C 47/06

(54) Verfahren zur Herstellung von Mehrschicht-Platten.

(30) Priorität: **16.03.81 DE 3110157**

(43) Veröffentlichungstag der Anmeldung:
**22.09.82 Patentblatt 82/38**

(45) Bekanntmachung des Hinweises auf die Patenterteilung:
**09.11.88 Patentblatt 88/45**

(84) Benannte Vertragsstaaten:
**AT DE GB NL**

(56) Entgegenhaltungen:
**CH-A- 430 171
DE-A-2 006 680
DE-A-2 138 231
DE-A-2 157 093
FR-A-1 251 398
FR-A-2 216 109
FR-A-2 218 989
FR-A-2 364 753
US-A-3 620 880
US-A-4 238 266
US-E- 25 200**

(73) Patentinhaber: **Baus, Heinz Georg
Wartbodenstrasse 35
CH-3626 Hünibach-Thun (CH)**

(72) Erfinder: **Baus, Heinz Georg
Wartbodenstrasse 35
CH-3626 Hünibach-Thun (CH)**

(74) Vertreter: **Klose, Hans, Dipl.-Phys.
Kurfürstenstrasse 32
D-6700 Ludwigshafen (DE)**

Courier Press, Leamington Spa, England.

**Beschreibung**

Die Erfindung bezieht sich auf ein Verfahren zur Herstellung von Mehrschicht-Platten gemäß den im Oberbegriff des Patentanspruchs 1 angegebenen Merkmalen.

Aus der US-A-42 38 266 ist ein derartiges Verfahren nachgewiesen, gemäß welchem die aus zwei Extrudern gelieferten Bahnen unter Einschluß eines von einer Rolle abgewickelten Strukturbandes mit einander verbunden werden. Jedem der beiden Extruder ist eine separate Walzenanordnung zugeordnet, die räumlich getrennt voneinander angeordnet sind. Die mit dem Strukturband verbundene erste Bahn muß über geeignete Zufuhrvorrichtungen zu der beabstandet angeordneten Walzenanordnung des zweiten Extruders gefördert werden. Im Hinblick auf die hierbei zu durchlaufende endliche Strecke zwischen der ersten und der zweiten Walzenanordnung erfolgt eine nicht unerhebliche Abkühlung der ersten Bahn, sofern nicht zusätzliche Maßnahmen insoweit getroffen werden. Die zur Durchführung des Verfahrens erforderlichen beiden separaten Walzenanordnungen erfordern einen nicht unerheblichen Aufwand im Hinblick auf Investitionskosten und Platzbedarf ebenso wie im Hinblick auf die Synchronisation der beiden Walzenanordnungen hinsichtlich Drehzahl und Abzugsgeschwindigkeit.

Aus der FR-A-23 64 753 ist ein Verfahren zur Herstellung von Mehrschicht-Platten nachgewiesen, bei welchem die aus zwei Extrudern gelieferten Bahnen einer gemeinsamen Walzenanordnung zugeführt werden. In den gleichen Spalt werden sowohl die beiden Bahnen als auch das Strukturband gemeinsam eingeführt. Die beiden Extruder sind auf der gleichen Seite der Walzenanordnung angeordnet und die Breitschlitzdüsen weisen zu dem genannten Einzugsspalt einen relativ großen Abstand auf, wodurch eine Abkühlung der Bahnen verursacht wird. Daher ist vor dem Spalt eine Heizeinrichtung zur Aufheizung der Verbundflächen der beiden Bahnen vorgesehen. Die genannte Heizeinrichtung erfordert einen zusätzlichen konstruktiven Aufwand. Das gemeinsame Einführen der Bahnen und des Strukturbandes kann in der Praxis zu Schwierigkeiten führen, um eine gleichmäßige Ausrichtung des Strukturbandes zwischen den beiden Bahnen zu gewährleisten. Gemäß einer weiteren Ausführungsform sind zwei Walzenanordnungen mit jeweils wenigstens zwei Walzen vorgesehen, die mit ihren jeweiligen Endwalzen einen Verbundspalt bilden. Jeder der beiden Walzengruppen können zwei Bahnen aus Breitschlitzdüsen zugeführt werden, welche auf den beiden Seiten bezüglich der jeweiligen Walzengruppe angeordnet said. Es werden mittels den Walzengruppen zwei Halbtafelstränge gebildet, welche dem genannten Verbundspalt gemeinsam zugeführt werden. Eine Ausrichtung eines Strukturbandes auf einer der Walzen kann nicht ohne weiteres realisiert werden und ferner ist den beiden Halbtafelsträngen vor dem Eintritt in den Verbundspalt eine zusätzliche Heizeinrichtung zugeordnet.

Ferner ist aus der CH-A-430 171 ein Verfahren zum Herstellen von Bahnen oder Platten aus thermoplastischen Kunststoffen mit eingebetteten Verstärkungseinlagen nachgewiesen, gemäß welchem eine erste Kunststoffbahn von einem Wickel abgerollt und der Walzenanordnung zugeführt wird. Die Verstärkungseinlage wird auf die Oberfläche der genannten Kunststoffbahn aufgelegt und mit dieser in den ersten Spalt der Walzenanordnung eingezogen. In den gleichen Spalt wird die zweite, unmittelbar aus einem Extruder geförderte Bahn eingeführt. Um eine angemessene Temperierung zu erhalten, wird die auf den genannten Wickel aufgewickelte erste Bahn in einem Wärmeschrank ständig auf einer wesentlich höheren Temperatur als Raumtemperatur gehalten. Der konstruktive Aufwand und die Betriebskosten bei der Durchführung des Verfahrens sind nicht unerheblich. Wird durch Bestrahlung der Bahnen mittels Infrarotstrahlen die Temperierung der Bahnen vorgenommen, so ist ein entsprechender Energieeinsatz erforderlich.

Der Erfindung liegt daher die Aufgabe zu Grunde, das Verfahren der gattungsgemäßen Art dahingehend weiterzubilden, daß es mit geringem konstruktivem Aufwand realisiert werden kann und einen geringen Energieeinsatz erfordert, wobei eine gute und dauerhafte Verbindung der beiden Bahnen und des Strukturbandes gewährleistet werden soll.

Zur Lösung dieser Aufgabe dienen die im Kennzeichen des Patentanspruchs 1 angegebenen Merkmale.

Das vorgeschlagene Verfahren ermöglicht im wesentlichen unter Verwendung von bekannten Anlageteilen in einfacher Weise die Herstellung von Mehrschicht-Platten. Auf Grund der Anordnung der beiden Breitschlitzdüsen der Extruder auf den gegenüberliegenden Seiten der einzigen, gemeinsamen als 3-Walzen-Kalander ausgebildeten Walzenanordnung kann unmittelbar die in den Bahnen noch enthaltene Wärme genutzt werden. Die bei längeren Zuführstrecken eintretenden Wärmeverluste werden vermieden, so daß zusätzliche Heizeinrichtungen und ein zusätzlicher Energieeinsatz nicht erforderlich sind, wobei gleichwohl eine zuverlässige Verbindung der Bahnen und der Struktur erreicht wird. Das Verfahren kann mit einem Minimum an Anlageteilen durchgeführt werden, wobei die Abstimmung, Synchronisation und Regelung der Walzenanordnung sowie der beiden Extruder und der Abwickelvorrichtung für das Strukturband in einfacher Weise vorgenommen werden kann. Die beiden Extruder lassen sich problemlos zu beiden Seiten nahe der gemeinsamen Walzenanordnung anordnen, wobei aufwendige Fundamente oder dergleichen entbehrlich sind. Das Verfahren ist in einfacher Weise handhabbar und der Personaleinsatz, insbesondere beim Anfahren der Vorrichtung wird auf ein Minimum reduziert. Es bereitet keine Schwierigkeiten, das Einführen der Bahnen und des Strukturbandes beim Anfahren der Walzenanordnung mit verminderter Drehzahl vorzunehmen und nach Abschluß derartiger Vorarbeiten die Walzenanordnung und die beiden Extruder synchron auf die Nenndrehzahl hochzufahren. Die einzige als gemeinsame 3-Walzen-Kalander ausgebildete Walzenanordnung erfordert einen vergleichsweise geringen Investitionsaufwand und ist in einfacher Weise zu bedienen.

Eine besondere Ausgestaltung des Verfahrens ist dadurch gekennzeichnet, daß die in den ersten Spalt eingeführte erste Bahn eine niedrigere Temperatur aufweist als die in den zweiten Spalt eingeführte zweite Bahn. Hierdurch wird in einfacher Weise ein unkontrolliertes Eindringen des Strukturbandes in die erste Bahn vermieden. Auf Grund der höheren Temperatur der zweiten Bahn wird gleichwohl eine zuverlässigere Bindung gewährleistet. Das Anfahren und Einstellen der Extruder und der Walzenanordnung wird vereinfacht, wobei die Ausschußrate nicht unwesentlich verringert und eine hohe Produktivität gewährleistet wird.

Eine weitere Ausgestaltung des Verfahrens ist dadurch gekennzeichnet, daß die Eintrittstemperatur wenigstens der ersten Bahn bis zu 100°C vorteilhaft 50 Grad und vorzugsweise bis 20 Grad, über dem Schmelzpunkt des Kunststoffes liegt. Ein zu tiefes Eindringen des Strukturbandes in die erste Bahn wird vermieden und gleichwohl ist in dem angegebenen Temperaturbereich der Walzvorgang noch gut durchführbar, so daß eine fehlerfreie Oberfläche der ersten Bahn und folglich der fertigen Mehrschicht-Platte erreichbar ist.

Gemäß einer besonderen Ausgestaltung ist das Verfahren dadurch gekennzeichnet, daß als Strukturband ein textiles Material bevorzugt Gardinenstoffe verwendet wird. Textile Materialien neigen bekanntlich auf Grund ihrer großen Flexibilität bei der Verarbeitung leicht zur Faltenbildung, so daß bisher als Strukturbänder Verstärkungseinlagen, Glasfasermatten oder ähnliches zwischen Bahnen eingeführt wurden. Es waren zusätzliche Maßnahmen hinsichtlich Synchronisation, Regelung u.s.w. der verschiedenen Anlagenteile oder Walzenanordnungen notwendig. Durch das Einbringen des textilen Materiales in der vorgeschlagenen Weise mit nur einer Walzenanordnung wird einerseits der Herstellungsaufwand geringer gehalten und andererseits wird das textile Material mittels den Kunststoffbahnen vor äußeren Einwirkungen geschützt. Besteht wenigstens die erste Bahn aus einem lichtdurchlässigen Kunststoff, so ist das Strukturband bzw. das textile Material nach außen hin ohne weiteres sichtbar. Die nach dem Verfahren gefertigte Platte kann daher ohne Schwierigkeiten auch in einer Duschabtrennung zum Einsatz gelangen, ohne daß Feuchtigkeit das zwischen den Bahnen versiegelte textile Material schädigen könnte. Wird das Verfahren mit einer als Walzenglättmaschine ausgebildeten Walzenanordnung durchgeführt, deren Walzen im wesentlichen glatte Oberflächen aufweisen, so sind die Oberflächen der Platte gleichfalls glatt. Wird die Platte in einen Rahmen eingesetzt, so ermöglicht dieser eine gute Abdichtung, so daß das Eindringen von Schmutz, Verunreinigungen oder Krankheitserregern vermieden werden kann und ferner auch das Strukturband auch im Bereich der Schnittkanten der Platte vor derartigen Einwirkungen gut geschützt ist.

Die Erfindung wird nachfolgend anhand der in der Zeichnung dargestellten Ausführungsbeispiele näher erläutert. Es zeigen:

Figur 1 Eine Prinzipdarstellung einer Vorrichtung zur Durchführung des Verfahrens,

Figur 2 einen Schnitt durch ein Türelement, welches eine nach dem Verfahren gefertigte Mehrschicht-Platte enthält.

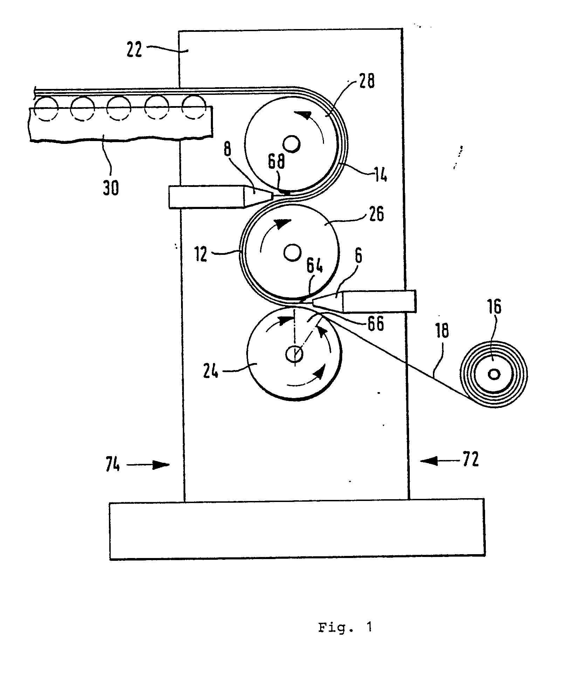

Die Figur 1 zeigt die Vorrichtung, bei welcher die Walzenanordnung als eine Walzenglättmaschine 22 mit drei Walzen 24, 26, 28 ausgebildet ist. Von den Extrudern sind deren Breitschlitzdüsen 6, 8 schematisch angedeutet und es ist ersichtlich, daß die dazugehörenden Extruder jeweils auf der einen bzw. anderen Seite 72 bzw. 74 der Walzenglättmaschine 22 angeordnet sind. Die genannten Düsen 6, 8 sind in unmittelbarer Nähe der Spalte 64, 68 angeordnet, so daß die beiden Bahnen 12, 14 auch unmittelbar in diese Spalte bzw. die Walzenglättmaschine einführbar sind. Gemeinsam mit der ersten Bahn 12 wird ein Strukturtband 18 dem ersten Spalt 64 zugeführt. Das Strukturband 18, welches von der Abwickelvorrichtung 16 geliefert wird, liegt vor dem Eintritt in den Spalt 64 auf der unteren Walze 24 in einem vorgegebenen Winkelbereich 66 auf. Hierdurch wird eine zuverlässige Ausrichtung des Strukturbandes 18 beim Eintritt in den ersten Spalt 64 gewährleistet, so daß Falten oder dergl. in der fertigen Mehrschicht-Platte vermieden werden. Die Walze 26 wird von der Bahn 12 sowie dem Strukturband 18 über einen Winkelbereich von 180° umschlungen, wobei eine gewisse Abkühlung der Bahn 12 erfolgt. Hierbei erfolgt eine hinreichende Vorfixierung des Strukturbandes 18 auf der Bahn 12. In den zweiten Spalt 68 wird dann die zweite Bahn 14 eingeführt, wobei aufgrund der Vorfixierung des Strukturbandes 18 ein unerwünschtes Einpressen in die noch vergleichsweise warme Bahn 14 vermieden wird. Da die beiden Breitschlitzdüsen 6, 8 bzw. die Extruder auf den Seiten 72 bzw. 74 angeordnet sind, weist die Vorrichtung insgesamt eine vergleichsweise geringe Bauhöhe auf. Die genannten Extruder müssen nämlich nicht, wie es bisher erforderlich war, in vertikaler Richtung übereinander angeordnet werden. Es ist ferner ersichtlich, daß die Breitschlitzdüsen 6, 8 ohne weiteres zugänglich sind, wobei die Breitschlitzdüse 6 von oben her zugänglich und einstellbar ist und die Breitschlitzdüse 8 von unten her einstellbar ist. Das Bedienungspersonal hat somit ein hinreichend großen Raum für derartige Arbeiten zur Verfügung.

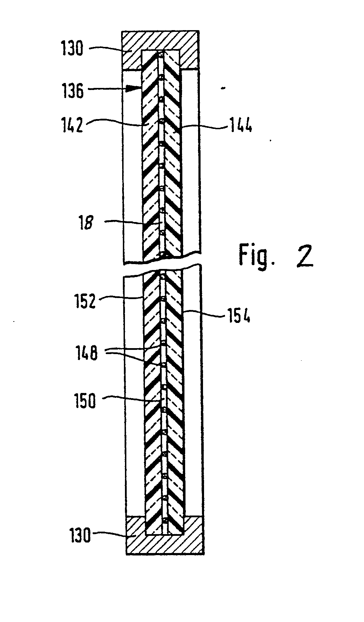

Fig. 2 zeigt schematisch einen vertikalen Schnitt durch ein Türelement einer Duschabtrennung. Die Platte 136 besteht aus zwei äußeren Schichten 142, 144, welche aus einem lichtdurchlässigen Kunststoff bestehen und aus den eingangs erläuterten beiden Kunststoffbahnen hergestellt sind. Zwischen den äußeren Schichten 142 und 144 befindet sich das Strukturband 18, das hier aus einem textilen Material, und zwar aus einem Gardinenstoff besteht. Aus Gründen der Übersichtlichkeit ist dieser Gardinenstoff vergrößert dargestellt, wobei die Schußfäden mit 148 und die Kettfäden mit 150 bezeichnet sind. Die äußeren Schichten 142, 144 und das Strukturband 18 sind fest miteinander verbunden. Da die Schichten 142, 144 aus einem lichtdurchlässigen oder transparenten Kunststoff bestehen, ist das Strukturband 18 bzw. der Gardinenstoff selbst mit seinem Design nach außen hin vollständig sichtbar. Andererseits wird aber der Gardinenstoff durch die Kunststoffschichten 142, 144 vor äußeren Einwirkungen, insbesondere vor dem Eindringen von Feuchtigkeit oder Verschmutzungen geschützt. Die Außenflächen 152, 154 der Platte 136 sind im wesentlichen glatt ausgebildet und der Rahmen 130 liegt dicht an den Außenflächen 152, 154 an, um das Eindringen von Verschmutzungen zwischen Rahmen 130 und Platte 136 zu verhindern. Ggfs. können zwischen die Platte 136 und den Rahmen 130 geeignete Dichtungen angeordnet sein, wodurch eine besonders gute Abdichtung erreicht wird und Verschmutzungen oder gar Krankheitserreger praktisch nicht eindringen können.

## Patentansprüche

1. Verfahren zur Herstellung von Mehrschicht-Platten aus extrudierbarem Kunststoff, bei welchem Verfahren zwei mittels Extrudern mit Breitschlitzdüsen (6, 8) gelieferte Bahnen (12, 14) aus Kunststoff unter Einschluß eines Strukturbandes (18) mittels einer Walzenanordnung (22) miteinander verbunden werden, wobei die Bahnen (12, 14) einem ersten bzw. zweiten Spalt (64 bzw. 68) der Walzenanordnung (22) zugeführt werden, wobei die Breitschlitzdüsen (6, 8) jeweils auf einer der beiden Seiten (72, 74) der Walzenanordnung (22) angeordnet sind, wobei das Strukturband (18) vor dem Eintritt in den genannten ersten Spalt (64) auf einer Walze (24) der Walzenanordnung (22) über einen vorgegebenen Winkelbereich (66) aufliegt und zunächst in dem ersten Spalt (64) mit der ersten Bahn (12) in Verbindung gebracht wird, wobei hinter dem ersten Spalt (64) eine Fixierung des Strukturbandes (18) auf der Oberfläche der ersten Bahn (12) erfolgt und wobei in dem zweiten Spalt (68) die Verbindung der zweiten Bahn (14) mit dem Strukturband (18) und mit der ersten Bahn (12) erfolgt, dadurch gekennzeichnet, daß beide Breitschlitzdüsen (6, 8) der Extruder in einem derart geringen Abstand auf gegenüberliegenden Seiten der einzigen, gemeinsamen als 3-Walzen-Kalander ausgebildeten Walzenanordnung (22) angeordnet sind, daß aufgrund der in den Bahnen (12, 14) vom Extrudieren noch enthaltenen Wärme eine Verbindung der Bahnen (12, 14) und des Strukturbandes (18) erreicht wird.

2. Verfahren nach Anspruch 1, dadurch gekennzeichnet, daß die in den ersten Spalt (64) eingeführte erste Bahn (12) eine niedrigere Temperatur aufweist als die in den zweiten Spalt (68) eingeführte zweite Bahn (14).

3. Verfahren nach Anspruch 1, dadurch gekennzeichnet, daß die Eintrittstemperatur wenigstens der ersten Bahn (12) bis zu 100 Grad Celsius, vorteilhaft 50 Grad Celsius, und vorzugsweise bis 20 Grad Celsius über dem Schmelzpunkt des Kunststoffes liegt.

4. Verfahren nach einem der Ansprüche 1 bis 3, dadurch gekennzeichnet, daß die Walzenanordnung (22) als Walzenglättmaschine ausgebildet ist, deren Walzen (24, 26, 28) im wesentlichen glatte Oberflächen aufweisen.

5. Verfahren nach einem der Ansprüche 1 bis 4, dadurch gekennzeichnet, daß als Strukturband (18) ein textiles Material, bevorzugt Gardinenstoff, verwendet wird.

6. Verfahren nach einem der Ansprüche 1 bis 5, dadurch gekennzeichnet, daß wenigstens die erste Bahn (12) aus einem lichtdurchlässigen Kunststoff hergestellt wird.

## Revendications

1. Procédé de fabrication de plaques multicouches en matière plastique extrudable, dans lequel deux feuilles continues (12, 14) de matière plastique, débitées au moyen de deux extrudeuses munies de filières à large fente (6, 8) sont réunies l'une à l'autre, avec inclusion d'une bande de structure (18), au moyen d'un dispositif à rouleaux (22), les feuilles continues (12, 14) étant acheminées respectivement à une première et une deuxième fentes (64 et 68) du dispositif à rouleaux (22), les filières à large fente (6, 8) étant disposées respectivement sur les deux côtés (72, 74) du jeu de rouleaux (22), la bande de structure (18) étant appuyée, avant son entrée dans la première fente précitée (64) sur un rouleau (24) du dispositif à rouleaux (22), sur un angle prédéterminé (66), et étant tout d'abord assemblée à la première feuille continue (12) dans la première fente (64), cependant que, en aval de la première fente (64) il se produit une fixation de la bande de structure (18) sur la surface de la première feuille continue (12) et que, dans la deuxième fent (68), se produit l'assemblage de la deuxième feuille continue (14) avec la bande de structure (18) et avec la première feuille continue (12), caractérisé en ce que les deux filières à large fente (6, 8) des extrudeuses sont disposées sur les deux côtés opposés de l'unique dispositif à rouleaux (22), commun, constitué par une calandre à trois rouleaux et à une distance de ce dispositif à rouleaux suffisamment petite pour que, sous l'effet de la chaleur qui est encore contenue dans les feuilles continues (12, 14) issues des extrudeuses, on obtienne un assemblage entre les feuilles continues (12, 14) et la bande de structure (18).

2. Procédé selon la revendication 1, caractérisé en ce que la première feuille continue (12) introduite dans la première fente (64) présente une

tempèrature infèrieure à celle de la deuxième feuille continue (14) introduite dans la deuxième fente (68).

3. Procédé selon la revendication 1, caractérisé en ce que la température d'entrée d'au moins la première feuille continue (12) est supérieure au point de fusion de la matière plastique d'une valeur pouvant atteindre jusqu'a 100°C, avantageusement jusqua'à 50°C et de préférence jusqu'à 20°C.

4. Procédé selon l'une des revendications 1 à 3, caractérisé en ce que le dispositif à rouleaux (22) est constitué par une machine à lisser à rouleaux dont les rouleaux (24, 26, 28) possèdent des surfaces sensiblement lisses.

5. Procédé selon l'une des revendications 1 à 4, caractérisé en ce qu'on utilise comme bande de structure (18) une matière textile, de préférencé, un tulle.

6. Procédé selon l'une des revendications 1 à 5, caractérisé en ce qu'au moins la première feuille continue (12) est fabriquée en une matière plastique translucide.

**Claims**

1. Process for producing laminated sheets from extrudable plastics, wherein two sheets (12, 14) of plastics delivered from extruders with flat sheeting dies (6, 8) are joined together, with inclusion of a structural web (18), by means of a roller arrangement (22), the sheets (12, 14) being supplied to a first or second gap respectively (64 or 68, respectively) of the roller arrangement (22), the flat sheeting dies (6, 8) respectively being arranged on one of the two sides (72, 74) of the roller arrangement (22), whilst the structural web (18) before it enters said first gap (64) rests on a roller (24) of the roller arrangement (22) over a given angular range (66) and is first brought into contact with the first sheet (12) in the first gap (64), fixing of the structural web (18) to the surface of the first sheet (12) occurring downstream of the first gap (64) and the joining of the second sheet (14) to the structural web (18) and the first sheet (12) occurring in the second gap (68), characterised in that the two flat sheeting dies (6, 8) of the extruders are arranged at such a small spacing on opposite sides of the single, combined roller arrangement (22), which is constructed as a 3-roller calender, that the heat still contained in the sheets (12, 14) from the extrusion process causes the sheets (12, 14) and the structural web (18) to be joined together.

2. Process according to claim 1, characterised in that the first sheet (12) introduced into the first gap (64) is at a lower temperature than the second sheet (14) introduced into the second gap (68).

3. Process according to claim 1, characterised in that the entry temperature of at least the first sheet (12) is up to 100°C, advantageously 50°C, and preferably up to 20°C above the melting point of the plastics material.

4. Process according to one of claims 1 to 3, characterised in that the roller arrangement (22) is constructed as a roller-type smoothing machine, the rollers (24, 26, 28) of which have substantially smooth surfaces.

5. Process according to one of claims 1 to 4, characterised in that a textile material, preferably curtain material, is used as the structural web (18).

6. Process according to one of claims 1 to 5, characterised in that at least the first sheet (12) is made from a translucent plastics material.

Fig. 1

Fig. 2